# EUROPEAN PATENT SPECIFICATION

(11) **EP 1 585 416 B1**
(45) Date of publication and mention of the grant of the patent: **15.04.2009**
(21) Application number: 03708858.0
(22) Date of filing: 21.01.2003
(51) Int. Cl.: A47J 42/04

(54) **ROTARY KITCHEN GARLIC TOOL**
DREHBARE KNOBLAUCHPRESSE
PRESSE-AIL ROTATIF DE CUISINE

(43) Date of publication of application: 19.10.2005
(73) Proprietor: Teng, Eric, Gold River, CA 95670 (US)
(72) Inventor: Teng, Eric, Gold River, CA 95670 (US)
(74) Representative: Lind, Urban Arvid Oskar
(86) International application number: PCT/US2003/001724
(87) International publication number: WO 2004/066798

(56) References cited:
- US-A- 795 746
- US-A- 795 746
- US-A- 1 515 798
- US-A- 2 147 394
- US-A- 3 581 790
- US-A1- 2003 015 611
- US-B2- 6 517 018

## Description

### BACKGROUND - FIELD OF INVENTION

The present invention pertains to a kitchen utensil used in the preparation of garlic for cooking. Specifically, it relates to the common kitchen garlic press.

### BACKGROUND - CROSS REFERENCE TO RELATED APPLICATIONS

This application is entitled to the benefit of a document disclosure filed on February 8, 2000 ref. No. 468841 and also entitled to the benefit of a Provisional Patent Application Ser.# j 1002 USPTO 60/304901 on the same invention filed on July 11, 2001.

### BACKGROUND - DESCRIPTION OF PRIOR ART

A common kitchen garlic press is constructed of a garlic chamber with a perforated sieve member in the bottom located near a hinge which joints two lever arms. The top lever arm operates a plunger which moves vertically within the chamber to squeeze garlic through the perforations. There are numerous existing patents for this type of garlic press with each one a minor variation of this fundamental design. Examples of these can be found in Lackie USP 5,370,044, Gibson USP 5,463,941, and Laib USP 5,467,699, etc.

In this type of garlic press, each clove of garlic should first be pre-peeled to avoid the peelings blocking the perforations. Then substantial pressure is required to force the closing of the two levers to squeeze on the clove of garlic.

There are several commonly recognized problems with garlic tools of this design:
1) Difficulty in use - requires pre-peeling of garlic cloves and strong wrist strength in pressing;
2) Substantial wastage - garlic bits remain in the chamber and perforations;
3) Pulverized garlic bits - may not be desirable for the intended use;
4) Difficulty in Cleaning - compressed garlic bits tend to get stuck in perforations and crevices.
5) Inadvertent garlic juice spray

There are several garlic tools on the market that attempts to alleviate the problem of difficult garlic pressing by having longer and bigger lever arms or with soft handles. Petronelli US 4,582,265 presented a somewhat different approach by having a rotatable plunger with patterns on the plunger surface so that the garlic clove can be ground into finer particles before forced out of the perforations on the sieve member. Other existing patents specifically attempt to deal with the very real and undesirable cleaning problem by providing special cleaning device, or special non-stick surface such as presented by Ancona USP 5,520,104, Short et al. USP 6,237,474 and Moor USP5,513,562, etc.

Such extraordinary efforts at improvement, however, only succeed at best in alleviating some of the noted disadvantages. So long as a garlic press retains the traditional two-lever, perforated sieve chamber design, all of the above-mentioned five problems clearly remain, if to a varying degree.

Other inventors also recognize such problems and attempts were made to design garlic tools that can overcome such shortcomings. These following patents, Repac and Culig USP 5,947,016, Bigelow et al USP 6,244,529, Holcomb US 4537123, a UK design patent 2039383, and an Australian reg.des. No.114662 (also registered as UK reg. Des. No. 2,013,169) presented different cutters or graters that do not follow the traditional two lever, perforated sieve chamber design. Although such devices appear to be satisfactory for their designed purposes, since the devices have many separate parts, they are unnecessarily bulky, complicated, slow to operate, and have high production costs.

The above mentioned types of utensils tools represent almost all of the known kitchen garlic tools or the garlic presses. A common feature among all of them is that the processed garlic is forced to pass through multiple perforations on either a grater plate with raised tiny sharp cutting edges, or through a sieve member.

A different class of kitchen utensil that is not designed specifically for garlic preparation but nevertheless can be used for such purpose is the kitchen chopper. This can be in the shape of a cylindrical container about the size of a beaker having a vertically traveling member with attached cutter blades at its bottom. The traveling member is held up as its normal resting position by a spring means. The vertically traveling member can be pressed down by hand chopping the material resting on the bottom of the container into fine bits. Another popular kitchen chopper most commonly used to prepare salsa has a pair of rotating blades inside a container. The material resting on the bottom is chopped up by cranking a handle on the top of the container rotating the chopping blades.

The main problem of using such kitchen choppers for garlic preparation is that they occupy a large space, they contain many parts and are expensive, and processed garlic bits are difficult to gather etc. Simply put, they represent unwarranted overkill for the purpose of garlic preparation, with a result that is less than satisfactory.

A survey of the available cookbooks reveals that few cook book authors advocate the use of the commonly available garlic presses for garlic preparation presumably because of the problems previously mentioned. But instead, they provide detail instructions in how to properly prepare garlic cloves by using a kitchen knife, or pre-boiling, or pre-baking of the garlic clove. Unfortunately, all such efforts are either complicated, requiring much skill and practice; or are slow and inefficient. All in all, garlic preparation in the kitchen has always been a slow, difficult, unpleasant, and daunting task.

Lastly, other than prior arts in garlic preparation devices, reference is also made to the following two existing patents because of some features they have in common with the present invention: W. H. Wingfield USP 795,746 presents a tobacco grinder that has cutting elements arranged in concentric circles over the grinding surface on each half, and M. D. Conte USP 3,581,790 has a drive-shaft driving grinding surfaces used in grinding of cheese.

### OBJECTS AND ADVANTAGES

With the innovative, completely new design presented by this invention, all above mentioned disadvantages associated with a common kitchen garlic press are eliminated:

It is a first objective of this invention to provide a tool that would peel, press, and grate garlic or other edibles such as ginger, herbs, medical pills etc. with minimal effort.

It is a second objective of this invention to provide a tool that can efficiently accomplish said functions with negligible wastage, and is easy to clean.

It is another objective of this invention to provide a tool that is simple, compact and esthetically-pleasing, besides being highly functional.

Additional advantages from a manufacturer's standpoint include: a highly innovative product that is far superior to other competitive products on the market in every aspect and is extremely simple and economical to produce.

Other objects of the invention will in part be obvious and will in part appear hereinafter.

The invention accordingly comprise the device possessing the features, properties, and the relation of components which are exemplified in the following detailed disclosure and the scope of the application of which will be indicated in the appended claims.

For a fuller understanding of the nature and objects of the invention reference should be made to the following detailed description, taken in the accompanying drawings.

### BRIEF SUMMARY OF THE INVENTION

In accordance with the present invention a device for processing edibles and other materials according to the appended claims is provided. Garlic cloves are placed between the rotary grating means whereby they are processed by hand twisting. Grating can be precisely controlled as the user can continuously visually monitor the process for repeated grating until desired bit size and texture is reached. This device is particularly noted for its simplicity and elegant form-follows-function design and its complete functionality as a garlic-processing tool.

### BRIEF DESCRIPTION OF THE FIGURES

- FIG. 1: Perspective view of the preferred embodiment of the garlic tool according to the invention
- FIG. 2: Side cross-sectional view showing the relative positioning of the *intermingled* (or interlocked) grater element rows when they are in alignment
- FIG. 3: Top schemetic view showing the relative positioning of the *intermingled* (or interlocked) rows not being in alignment, and the locus of the grater elements

### DETAILED DESCRIPTION OF THE INVENTION (PREFERRED EMBODIMENT)

(Henceforth, the words "grating" and "mincing", and their respective derived terms carry the same meaning and are intended to be used interchangeably throughout this application while the word "processing" is used as a general term to describe preparing the garlic for cooking.)

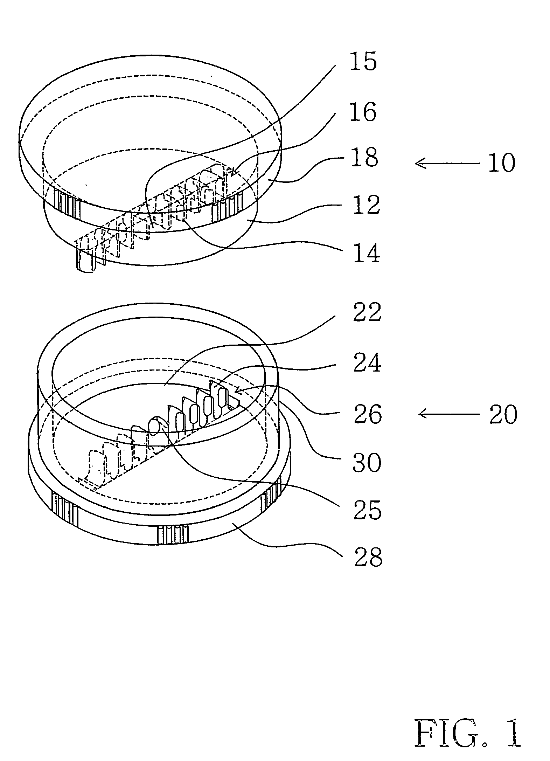

A typical and preferred embodiment of the garlic tool of this invention is illustrated in FIG. 1. A two-piece set of garlic utensil tool is constructed of a suitable material sufficiently hard to press and grate a clove of fresh garlic without permanent deformation such as plastic, metal, ceramic, glass etc. A transparent plastic such as polycarbonate is particularly suitable because such materials are attractive, and the processing can be visually monitored externally for precise processing.

The utensil tool consists of two opposite-facing, disc-shaped presser units:
1) a male presser unit 10 that has a protuberant male rotary grating means 12 comprising a plurality of protruding grater elements 14 with a center void 15 forming a grating or grater element row 16 located on the male rotary grating means; and a gripping edge 18;
2) a female presser unit 20 that has a sunken female grating means 22 comprising a plurality of protruding grater elements 24 having a center nipple 25 forming a grating or grater element row 26 located on the female rotary grating means; a gripping edge 28, and a circular receptacle 30.

The gripping edges 18 and 28 provide a convenient means for the hand gripping of the presser units. The gripping edge should preferably be circular in shape, but other shapes such as square, octagonal etc. would also work as long as the shape fits in human hands comfortably for gripping. The width or the diameter of the gripping edges should be wider than the external width or diameter of the circular receptacle on the female rotary grating means and be located on the two sides of the circular receptacle (see FIG. 1). The wider gripping edges would thus help provide a better grip when the presser units are being handled by the user. A compression and counter-twisting force can then be applied onto the presser units to process the garlic clove.

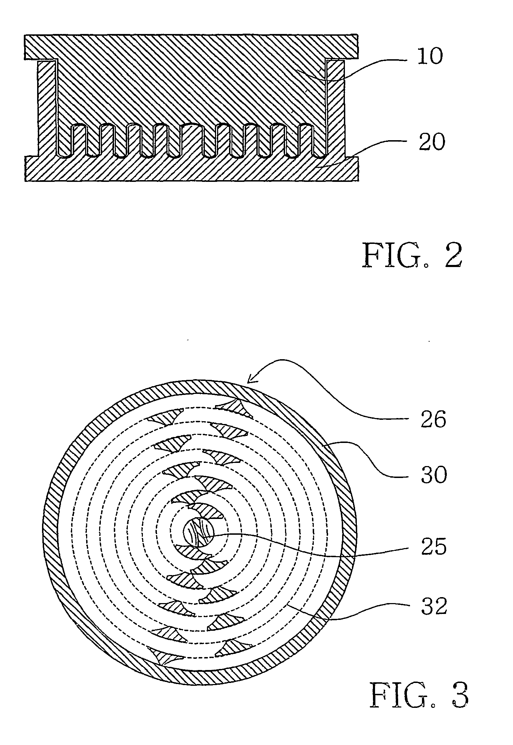

The circular receptacle 30 on the female presser unit serves several important functions:
- It retains the raw garlic cloves pending processing;
- It has an internal diameter slightly bigger than that of the diameter of the male rotary grating means so it can serve as a receptacle for the male rotary grating means to be freely inserted to mate with the female grating means for processing the garlic clove;
- It allows the two presser units to be freely rotatable against each other around a common axis to process the garlic clove(s);
- The circular receptacle 30 sets an appropriate depth for the male grating means to be inserted into the female grating means and enable the two rows of protruding grater elements to become *intermingled* (or interlocked) as they merge as shown in FIG. 2.
   ○ It provides for adequate separation between the two gripping edges so the user's fingers on one hand would not interfere with those on the other hand during usage;
   ○ Lastly it provides an enclosure for a short-term storage of processed garlic.

By arranging the protruding grater elements in two separate rows on the respective male and female grating means, they would function as two sets of grating "teeth" that works jointly to accomplish grating of the garlic clove.

FIG. 2 shows a cross sectional view of the garlic tool showing the preferred embodiment of having two rows of protruding grater elements that are *intermingled* (or interlocked) at the maximum insertion of the male grating means when they are rotated into alignment with the two sets of grater elements merging with each other forming one straight row. Thus it can be seen that when the male grating means is fully inserted and the two grating rows are rotated to align with each other, then any material that is caught between the two rows of protruding grater elements will be grated into bits the size of the distance between each adjacent grater elements on the same row. Note the protruding grater elements on the male grating means can reach all the way to the bottom of the protruding grater elements on the female grating means in this *intermingled* (or interlocked) design.

FIG. 3 shows a top schematic cross-sectional view of the relative positioning of the *intermingled* (or interlocked) rows of protruding grater elements at the maximum insertion of the male grating means when they are out of alignment by about 20 degrees as they are being counter-twisted relative to each other. Again, it can be seen here that the garlic clove placed anywhere within the sweeping path or locus 34 of the grater elements would be grated by the two closing rows of protruding grater elements.

The preferred embodiment of a protruding grater element is show in FIG.1 to have relatively sharp cutting edges on its sides for efficient grating and gentle rounded corners elsewhere to prevent garlic bits from being caught in crevices so they can be easily gathered and the garlic tool can be easily rinsed clean after use. Some bending or curvature of the element is shown in the figure. Simple geometry dictates that for as long as the elements have a certain width, they should have a certain curvature so the two separate sets of *interlocking* grater elements can rotate against each other without interference. So the curvature would be more pronounced for elements closer to the center. At the very center, one element row would have a center nipple 25, and the other element row would have a matching circular center void 15 as shown.

In the preferred embodiment, the protruding grater element is an integral part of the presser unit and is made of the same material such as polycarbonate or other clear or semi-clear plastic. Thus individual protruding elements should be made sizable for robustness. If the protruding grater elements are made of metal such as stainless steel, then they can be made to be less robust but considerably sharper.

The grater elements on both the male and female grating means in the preferred embodiment are basically similar to each other individually with only slight variations. The grater elements can also be different from each other. Variations in design for the protruding grater elements, or the center nipple and its corresponding void, however, can affect the bit size, grating efficiency, and the ease of cleaning.

When a clove of garlic is put between the male and female presser units, the user can apply a counter-twisting and compression force on the presser units by hand-gripping the two presser units at the gripping edges. The two counter-revolving rows of protruding grater elements on the presser units act as two pairs of rakes rotating in opposite directions swiping the pressed garlic. Slippage of the garlic between the two grating means is prevented. In the preferred embodiment, the pressed garlic is grated as the two *intermingled* rows of protruding grater elements is rotated to close in on each other finally passing through each other thus grating the pressed garlic into fine bits about the size of the width of each protruding grater element.

The pressed garlic can be repeatedly grated by simply rotating the presser units more turns. Since the user can visually monitor the garlic clove through the transparent presser units while it is being processed, the grating of the garlic clove can be precisely controlled for optimum bit size and texture.

After the garlic is properly grated, if the user first align the two rows of protruding grater elements together, and then slightly twist one presser units back-and-forth against the other in a small swing angle on either side of the other row, the garlic bits will become collected neatly in two pie-shaped piles in the space away from the grater element rows. This would enable the garlic bits to be easily scooped out for use and allow the presser units to be easily rinsed clean.

Instead of using the interlocking grater elements rows design, it can be seen that the rotary grating surfaces of the male and female presser units can potentially use certain grating design such as "waffle", diamond pattern, etc. Then the grating of garlic theoretically can be done by vigorously twisting and forcing the two presser units together. However, if pure surface grating patterns are employed as the only means for grating, then this operation is generally unsatisfactory at best. This is because pressed garlic has a tendency to slip between the two presser units regardless of the surface pattern making proper grating impossible to achieve. This problem is even more pronounced if the garlic cloves are not first pre-peeled.

Note the protruding grater elements rows can be arranged in:
- a long single row on the respective male and female grating means encompassing their respective centers; or looking at it slightly differently, in two short rows 180 degrees apart extending outward from their respective centers. This is the preferred embodiment shown in FIG.1.
- a "Y"-shaped arrangement representing three short rows of grater elements 120 degrees apart, extending outward from the respective centers of the two presser units.

This invention is unique in its being the only garlic tool that has the theoretical minimum possible number of parts - two presser units; and the only garlic preparation gadget that does not force processed garlic through predetermined perforations on a grating or sieve member. This invention is also unique in being the only one that would allow repeated grating in conjunction with continuous visual monitoring enabling precise garlic processing control for optimum bit size and texture.

### Reference Numerals in Drawings

- 10: male presser unit
- 12: rotary male grating means
- 14: protruding grater element
- 15: center void
- 16: grater element row
- 18: gripping edge

- 20: female presser unit
- 22: rotary female grating means
- 24: protruding grater element
- 25: center nipple
- 26: grater element row
- 28: gripping edge
- 30: circular receptacle
- 32: locus or sweeping path of grater elements

### OPERATION AND UTILIZATION

The operation of the garlic tool is simply accomplished by the following steps:
1) Pre-press to crush the garlic clove(s) by forcing the set of closed presser units down on an unpeeled garlic clove, or by striking it with the set. The skin of the garlic clove will come lose to be discarded.
2) Place the crush-peeled garlic clove(s) between the presser units.
3) Close the set together by inserting the male presser unit into the female presser unit.
4) Use both hands to counter-twist the two presser units while maintaining a slight compression force. Visually observe the processing to determine whether the garlic cloves are properly grated (external viewing of the entire processing is possible since the garlic tool is made of transparent plastic). Repeat counter-twisting if necessary.
5) Before opening the presser units, align the two grater element rows, then counter-twist the two presser units in a slight back-and forth motion against each other in a finite angle (less than 45 degrees on either side of each other). This would force the grated garlic bits to gather in two neat quadrant or pie-shaped piles in the space away from the two grater element rows allowing easy access to the garlic bits for use in cooking.
6) Rinse clean the set and leave to dry.

### CONCLUSION, RAMIFICATIONS, AND SCOPE OF INVENTION

Thus the reader will see that the garlic tool of the invention provides a simple, inexpensive, easy to operate and clean, compact and elegant device that is vastly superior to the common garlic press of the familiar two handle, perforated sieve design.

While the above description contains many specificities, these should not be construed as limitations on the scope of the invention, but rather as an exemplification of one preferred embodiment thereof. Many other variations are possible. For example, the exterior shape of the presser units including the gripping edges and the exterior of the receptacle can be square, or octagonal; the presser units can be made with non-transparent material such as aluminum (although losing the advantage that the garlic can be viewed as it is being processed); many other forms of the rotary grating means can be possible; and lastly the two presser units can form part of an automatic processing device, etc.

Accordingly, the scope of the invention should be determined not by the embodiments illustrated, but by the appended Claims and their legal equivalents.

## Claims

1. A device for processing edibles and other materials, the device comprising:
(a) a first presser unit (10) comprising a first rotary grating means (12) having a first circular surface and a first set of spaced-apart protruding grater elements (14), said first set of grater elements (14) being disposed along a plurality of radii of said first circular surface; and
(b) a second presser unit (20) comprising a second rotary grating means (22) having a circular receptacle means (30), a second circular surface, and a second set of spaced-apart protruding grater elements (24), said circular receptacle means (30) being configured to receive said first rotary grating means (12) for rotation therein, said second set of grater elements (24) being disposed along a plurality of radii of said second circular surface,
wherein said first set of grater elements (14) being configured to be intermingled with said second set of grater elements (24) when said first rotary grating means (12) is maximally inserted into said circular receptacle means (30) and when said first and second sets of grater elements (14, 24) are aligned, whereby edibles can be grated between said first and second presser units (10, 20) when said presser units (10, 20) are counter-twisted, **characterized in that**
said first rotary grating means (12) and said second rotary grating means (22) are configured to define at least two but not more than three circular sector regions free of grater elements and of equal volume when said first rotary grating means (12) is inserted into said second rotary grating means (22) and when said first and second sets of grater elements (14, 24) are aligned.

2. The device of claim **1, characterized in that** said first rotary grating means (12) comprises a protuberant rotary grating means.

3. The device of claim **1** or **2, characterized in that:**
said first set of spaced-apart grater elements (14) are disposed substantially along two radii of said first circular surface, separated by 180° and forming a grater element row (16);
said second set of spaced-apart grater elements (24) are disposed substantially along two radii of said second circular surface, separated by 180° and forming a grater element row (26); and
said first rotary grating means (12) and said second rotary grating means (22) are configured to define two generally semi-circular regions free of grater elements when said first rotary grating means (12) is inserted into said circular receptacle means (30) and when said first and second sets of grater elements (14, 24) are aligned.

4. The device of claims **1** or **2, characterized in that:**
said first set of spaced-apart grater elements (14) are disposed substantially along three radii of said first circular surface, separated by 120°;
said second set of spaced-apart grater elements (24) are disposed substantially along three radii of said second circular surface, separated by 120°; and
said first rotary grating means (12) and said second rotary grating means (22) are configured to define three generally circular sector regions free of grater elements when said first rotary grating means (12) is inserted into said circular receptacle means (30) and when said first and second sets of grater elements (14, 24) are aligned.

5. The device of any one of claims **1** to **4**, **characterized in that** said first presser unit (10) and said second presser unit (20) are sized to fit in a human hand.

6. The device of any one of claims **1** to **5, characterized in that** said first presser unit (10) further comprises a first gripping edge (18) extending wider than an external width of said circular receptacle means (30), and said second presser unit (20) further comprises a second gripping edge (28) extending wider than said external width of said circular receptacle means (30).

7. The device of any one of claims **1** to **6, characterized in that** said first presser unit (10) and said second presser (20) unit comprise transparent plastic.

8. The device of any one of claims **1** to **7, characterized in that** said first set of spaced-apart grater elements (14) define a center void (15), and wherein said second set of spaced-apart grater elements (24) further comprise a center nipple (25) positioned to be received in said center void (15).

9. The device of any one of claims **1** to **8, characterized in that** said first and second sets of grater elements (14, 24) comprise relatively sharp cutting edges.

10. The device of any one of claims **1** to **9, characterized in that** said first set of spaced-apart grater elements (14) are an integral part of said first presser unit (10), and said second set of spaced-apart grater elements (24) are an integral part of said second presser unit (20).

11. The device of any one of claims **1** to **10, characterized in that** said first set of spaced-apart grater elements (14) and second set of spaced-apart grater elements (24) comprise metal.

## Patentansprüche

1. Vorrichtung zum Verarbeiten von Lebensmitteln und anderen Materialien, wobei die Vorrichtung Folgendes umfasst:
(a) eine erste Presseinheit (10), die ein erstes Rotationsreibemittel (12) umfasst, das eine erste Kreisfläche und einen ersten Satz voneinander beabstandeter hervorstehender Reibeelemente (14) aufweist, wobei dieser erste Satz Reibeelemente (14) entlang mehrerer Radien der ersten Kreisfläche angeordnet ist; und
(b) eine zweite Presseinheit (20), die ein zweites Rotationsreibemittel (22) umfasst, das ein kreisrundes Aufnahmemittel (30), eine zweite Kreisfläche und einen zweiten Satz voneinander beabstandeter hervorstehender Reibeelemente (24) aufweist, wobei das kreisrunde Aufnahmemittel (30) dafür konfiguriert ist, das erste Rotationsreibemittel (12) aufzunehmen, damit es sich darin drehen kann, wobei der zweite Satz Reibeelemente (24) entlang mehrerer Radien der zweiten Kreisfläche angeordnet ist,
wobei der erste Satz Reibeelemente (14) dafür konfiguriert ist, mit dem zweiten Satz Reibeelemente (24) ineinandergreifend angeordnet zu werden, wenn das erste Rotationsreibemittel (12) maximal in das kreisrunde Aufnahmemittel (30) eingesetzt ist und wenn der erste und der zweite Satz Reibeelemente (14, 24) aufeinander ausgerichtet sind, wodurch Lebensmittel zwischen der ersten und der zweiten Presseinheit (10, 20) zerrieben werden können, wenn die Presseinheiten (10, 20) gegenläufig gedreht werden, **dadurch gekennzeichnet, dass**
das erste Rotationsreibemittel (12) und das zweite Rotationsreibemittel (22) so konfiguriert sind, dass sie mindestens zwei, aber nicht mehr als drei Kreissektorregionen frei von Reibeelementen und von gleichem Volumen bilden, wenn das erste Rotationsreibemittel (12) in das zweite Rotationsreibemittel (22) eingesetzt ist und wenn der erste und der zweite Satz Reibeelemente (14, 24) aufeinander ausgerichtet sind.

2. Vorrichtung nach Anspruch 1, **dadurch gekennzeichnet, dass** das erste Rotationsreibemittel (12) ein hervorstehendes Rotationsreibemittel umfasst.

3. Vorrichtung nach Anspruch 1 oder 2, **dadurch gekennzeichnet, dass:**
der erste Satz voneinander beabstandeter Reibeelemente (14) im Wesentlichen entlang zweier Radien der ersten Kreisfläche angeordnet sind, um 180° getrennt sind und eine Reibeelementreihe (16) bilden;
der zweite Satz voneinander beabstandeter Reibeelemente (24) im Wesentlichen entlang zweier Radien der zweiten Kreisfläche angeordnet sind, um 180° getrennt sind und eine Reibeelementreihe (26) bilden; und
das erste Rotationsreibemittel (12) und das zweite Rotationsreibemittel (22) so konfiguriert sind, dass sie zwei allgemein halbkreisförmige Regionen frei von Reibeelementen definieren, wenn das erste Rotationsreibemittel (12) in das kreisrunde Aufnahmemittel (30) eingesetzt ist und wenn der erste und der zweite Satz Reibeelemente (14, 24) aufeinander ausgerichtet sind.

4. Vorrichtung nach den Ansprüchen 1 oder 2, **dadurch gekennzeichnet, dass:**
der erste Satz voneinander beabstandeter Reibeelemente (14) im Wesentlichen entlang dreier Radien der ersten Kreisfläche angeordnet sind und um 120° getrennt sind;
der zweite Satz voneinander beabstandeter Reibeelemente (24) im Wesentlichen entlang dreier Radien der zweiten Kreisfläche angeordnet sind und um 120° getrennt sind; und
das erste Rotationsreibemittel (12) und das zweite Rotationsreibemittel (22) so konfiguriert sind, dass sie drei allgemein kreisförmige Sektorregionen frei von Reibeelementen definieren, wenn das erste Rotationsreibemittel (12) in das kreisrunde Aufnahmemittel (30) eingesetzt ist und wenn der erste und der zweite Satz Reibeelemente (14, 24) aufeinander ausgerichtet sind.

5. Vorrichtung nach einem der Ansprüche 1 bis 4, **dadurch gekennzeichnet, dass** die erste Presseinheit (10) und die zweite Presseinheit (20) so bemessen sind, dass sie in eine menschliche Hand passen.

6. Vorrichtung nach einem der Ansprüche 1 bis 5, **dadurch gekennzeichnet, dass** die erste Presseinheit (10) des Weiteren einen ersten Greifrand (18) umfasst, der sich weiter als eine äußere Breite des kreisrunden Aufnahmemittels (30) erstreckt, und dass die zweite Presseinheit (20) des Weiteren einen zweiten Greifrand (28) umfasst, der sich weiter als die äußere Breite des kreisrunden Aufnahmemittels (30) erstreckt.

7. Vorrichtung nach einem der Ansprüche 1 bis 6, **dadurch gekennzeichnet, dass** die erste Presseinheit (10) und die zweite Presseinheit (20) transparenten Kunststoff umfassen.

8. Vorrichtung nach einem der Ansprüche 1 bis 7, **dadurch gekennzeichnet, dass** der erste Satz voneinander beabstandeter Reibeelemente (14) einen mittigen Leerraum (15) definieren, und
wobei der zweite Satz voneinander beabstandeter Reibeelemente (24) des Weiteren einen mittigen Nippel (25) umfassen, der so positioniert ist, dass er in dem mittigen Leerraum (15) aufgenommen ist.

9. Vorrichtung nach einem der Ansprüche 1 bis 8, **dadurch gekennzeichnet, dass** der erste und der zweite Satz von Reibeelementen (14, 24) relativ scharfe Schneidkanten umfassen.

10. Vorrichtung nach einem der Ansprüche 1 bis 9, **dadurch gekennzeichnet, dass** der erste Satz voneinander beabstandeter Reibeelemente (14) ein integraler Teil der ersten Presseinheit (10) sind und dass der zweite Satz voneinander beabstandeter Reibeelemente (24) ein integraler Teil der zweiten Presseinheit (20) sind.

11. Vorrichtung nach einem der Ansprüche 1 bis 10, **dadurch gekennzeichnet, dass** der erste Satz voneinander beabstandeter Reibeelemente (14) und der zweite Satz voneinander beabstandeter Reibeelemente (24) Metall umfassen.

## Revendications

1. Dispositif de traitement de produits comestibles et d'autres matériaux, le dispositif comprenant :
(a) une première unité de presseur (10) comprenant un premier moyen de râpage rotatif (12) ayant une première surface circulaire et un premier jeu d'éléments de râpe dépassant en espacement les uns des autres (14), ledit premier jeu d'éléments de râpe (14) étant disposé le long d'une pluralité de rayons de ladite première surface circulaire ; et
(b) une seconde unité de presseur (20) comprenant un second moyen de râpage rotatif (22) ayant un moyen de réceptacle circulaire (30), une seconde surface circulaire et un second jeu d'éléments de râpe dépassant en espacement les uns des autres (24), ledit moyen de réceptacle circulaire (30) étant configuré afin de recevoir ledit premier moyen de râpage rotatif (12) en vue d'une rotation dans celui-ci, ledit second jeu d'éléments de râpe (24) étant disposé le long d'une pluralité de rayons de ladite seconde surface circulaire,
dans lequel ledit premier jeu d'éléments de râpe (14) est configuré afin d'être entremêlé avec ledit second jeu d'éléments de râpe (24) quand ledit premier moyen de râpage rotatif (12) est inséré au maximum dans ledit moyen de réceptacle circulaire (30) et quand lesdits premier et second jeux d'éléments de râpe (14,24) sont alignés, moyennant quoi des produits comestibles peuvent être râpés entre lesdites première et seconde unités de presseur (10,20) quand lesdites unités de presseur (10,20) sont tordues en sens opposé, **caractérisé en ce que**
ledit premier moyen de râpage rotatif (12) et ledit second moyen de râpage rotatif (22) sont configurés afin de définir au moins deux mais pas plus de trois régions à secteur circulaire exemptes d'éléments de râpe et d'un volume égal quand ledit premier moyen de râpage rotatif (12) est inséré dans ledit second moyen de râpage rotatif (22) et quand lesdits premier et second jeux d'éléments de râpe (14,24) sont alignés.

2. Dispositif selon la revendication 1, **caractérisé en ce que** ledit premier moyen de râpage rotatif (12) comprend un moyen de râpage rotatif protubérant.

3. Dispositif selon la revendication 1 ou 2, **caractérisé en ce que**
ledit premier jeu d'éléments de râpe espacés les uns des autres (14) sont disposés substantiellement le long de deux rayons de ladite première surface circulaire, séparés de 180° et formant une rangée d'éléments de râpe (16) ;
ledit second jeu d'éléments de râpe espacés les uns des autres (24) sont disposés substantiellement le long de deux rayons de ladite seconde surface circulaire, séparés de 180° et formant une rangée d'éléments de râpe (26) ; et
ledit moyen de râpage rotatif (12) et ledit second moyen de râpage rotatif (22) sont configurés afin de définir deux régions semi-circulaires exemptes d'éléments de râpe quand ledit premier moyen de râpage rotatif (12) est inséré dans ledit moyen de réceptacle circulaire (30) et quand lesdits premier et second jeux d'éléments de râpe (14,24) sont alignés.

4. Dispositif selon les revendications 1 ou 2, **caractérisé en ce que**
ledit premier jeu d'éléments de râpe espacés les uns des autres (14) sont disposés substantiellement le long de trois rayons de ladite première surface circulaire, séparés de 120° ;
ledit second jeu d'éléments de râpe espacés les uns des autres (24) sont disposés substantiellement le long de trois rayons de ladite seconde surface circulaire, séparés de 120° ; et
ledit premier moyen de râpage rotatif (12) et ledit second moyen de râpage rotatif (22) sont configurés afin de définir trois régions à secteur généralement circulaire exemptes d'éléments de râpe quand ledit premier moyen de râpage rotatif (12) est inséré dans ledit moyen de réceptacle circulaire (30) et quand lesdits premier et second jeux d'éléments de râpe (14,20) sont alignés.

5. Dispositif selon une quelconque des revendications 1 à 4, **caractérisé en ce que** ladite première unité de presseur (10) et ladite seconde unité de presseur (20) sont dimensionnées afin de s'ajuster à une main humaine.

6. Dispositif selon une quelconque des revendications 1 à 5, **caractérisé en ce que** ladite première unité de presseur (10) comprend en outre un premier bord de préhension (18) s'étendant plus largement qu'une largeur externe dudit moyen de réceptacle circulaire (30), et ladite seconde unité de presseur (20) comprend en outre un second bord de préhension (28) s'étendant plus largement que ladite largeur externe dudit moyen de réceptacle circulaire (30).

7. Dispositif selon une quelconque des revendications 1 à 6, **caractérisé en ce que** ladite première unité de presseur (10) et ladite seconde unité de presseur (20) comprennent du plastique transparent.

8. Dispositif selon une quelconque des revendications 1 à 7, **caractérisé en ce que** ledit premier jeu d'éléments de râpe espacés les uns des autres (14) définit un vide central (15), et dans lequel ledit second jeu d'éléments de râpe espacés les unes des autres (24) comprend en outre un mamelon central (25) positionné afin d'être reçu dans ledit vide central (15).

9. Dispositif selon une quelconque des revendications 1 à 8, **caractérisé en ce que** lesdits premier et second jeux d'éléments de râpe (14,24) comprennent des bords relativement tranchants.

10. Dispositif selon une quelconque des revendications 1 à 9, **caractérisé en ce que** ledit premier jeu d'éléments de râpe espacés les uns des autres (14) est partie intégrante de ladite première unité de presseur (10), et ledit second jeu d'éléments de râpe espacés les uns des autres (24) est partie intégrante de ladite seconde unité de presseur (20).

11. Dispositif selon une quelconque des revendications 1 à 10, **caractérisé en ce que** ledit premier jeu d'éléments de râpe espacés les uns des autres (14) et ledit second jeu d'éléments de râpe espacés les uns des autres (24) comprennent du métal.
